Europäisches Patentamt

(19) European Patent Office

Office européen des brevets

(11) Publication number: **0 003 176**
**B1**

## (12) EUROPEAN PATENT SPECIFICATION

(45) Date of publication of patent specification: **28.10.81**

(51) Int. Cl.³: **B 65 B 51/14**

(21) Application number: **79300044.9**

(22) Date of filing: **11.01.79**

(54) A machine for packaging items into plastics bags, and a sealing device for use therewith.

(30) Priority: **13.01.78 GB 136478**
**24.05.78 GB 136478**

(43) Date of publication of application:
**25.07.79 Bulletin 79/15**

(45) Publication of the grant of the European patent:
**28.10.81 Bulletin 81/43**

(84) Designated Contracting States:
**BE CH DE FR IT LU NL SE**

(56) References cited:
**FR - A - 2 264 643**
**US - A - 2 796 913**
**US - A - 3 234 072**
**US - A - 3 234 072**
**US - A - 3 309 837**

(73) Proprietor: **Ryburn Machinery (Ripponden) Limited**
**Oldham Road**
**Ripponden West Yorkshire. HX6 4EL (GB)**

(72) Inventor: **Oldham, Ronald**
**Brooklands Elland Road**
**Ripponden West Yorkshire (GB)**

(74) Representative: **Neill, Alastair William**
**Appleyard Lees & Co. 15 Clare Road**
**Halifax West Yorkshire HX1 2HY (GB)**

Courier Press, Leamington Spa, England.

A machine for packaging items into plastics bags, and a sealing device for use therewith.

This invention relates to a machine for packaging items into plastics bags and a device for sealing the bags after they have been packed. The sealing device not only heat seals the bag utilising electrical heat sealing means but also cuts through the bag between the edges of the seal to trim off waste at the mouth of the bag and leave a neat, sealed mouth.

Known heat sealers of this type employ a knife or wire which cuts through the plastics material. Examples are described in United States Patent Specifications 2796913, 3262833, 3653177 and 3933569 and in United Kingdom Patent Specification 1356792.

Many known heat sealers have a relatively slow production rate because after the plastics has been melted, time has to elapse for the plastics to harden before another cycle can be carried out.

In some heat sealers attempts have been made to improve production rate by increasing the rate at which the heat sealing means cools down between heating cycles. U.S. Patent Specification 3362833 describes the use of a heat sink and cooling of the sealing means using jets of air is described in United States Patent Specification 3933569 and United Kingdom Patent Specification 1356792.

However the production rate of known machines has still not been wholly satisfactory and we have developed a sealing device which appears to have more effective cooling characteristics. An elongate horizontally extending support jaw is used over which a plastics bag may be positioned. The electrical heat sealing means extends over an upper face of the support jaw and the jaw contains a cooling chamber. In between each heating pulse of electricity a pulse of compressed air is fed into the chamber through inlet passages in the lower face of the jaw and subsequently exhausts through outlet passages in a side face of the jaw.

The invention includes a machine for packaging items into plastics bags, the machine being fitted with a sealing device according to the invention.

One way of carrying out the invention is described in detail below with reference to drawings which illustrate only one specific embodiment, in which:—

Figure 1 is a perspective view of a plastics bag handling machine fitted with a sealing device according to the invention;

Figure 2 is a front view of a first jaw of the sealing device;

Figure 3 is a transverse cross-section through the jaw shown in Figure 2;

Figure 4 is a front view of a second jaw of the sealing device; and

Figure 5 is a transverse cross-section through the jaw shown in Figure 4.

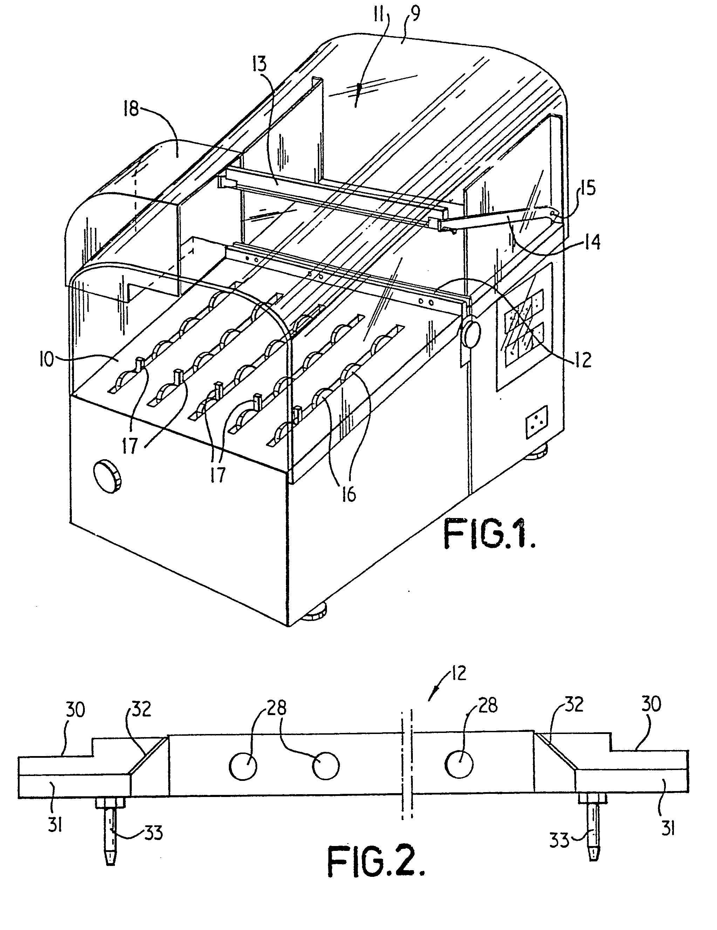

The machine shown in Figure 1 has an upper support surface 10 which is inclined at an angle to the horizontal. At the upper end of the support surface there is fitted an embodiment of sealing device according to the invention, indicated generally by the reference numeral 11. The sealing device has a fixed lower jaw 12 and a movable upper jaw 13. The jaw 13 is fixed between a pair of arms 14 which are pivotable about pivot points 15 to move the jaw 13 towards and away from the jaw 12. A plastics bag (not shown) can be filled with any desired contents and can then be positioned on the support surface 10 with the mouth of the bag projecting over the top of the lower jaw 12. The bag is prevented from slipping downwardly off the support surface 10 by a set of fingers 17, the position of which is adjustable to suit different sizes of bag. Rollers 16 are provided on the surface 10.

When a machine cycle is initiated, the upper jaw 13 moves downwardly to trap the mouth of the bag against the lower jaw 12. A transverse seal is formed across the mouth of the bag and simultaneously a split is formed extending parallel with the seal and lying within the edges of the seal. This split cuts off the waste skirt at the mouth of the bag and leaves a neat finish. The jaw 13 then rises again, the scrap material is blown out of a waste chute 18 into a collecting container (not shown) at one side of the machine by a jet of air, the fingers 17 then retract, and the bag slides off the machine on the rollers 16 either to be received by an operator or by a receptacle or conveyor belt (not shown). The upper part of the machine is covered by a perspex guard 9. The details of the machine other than the sealing device do not form part of this invention and will not therefore be described in detail.

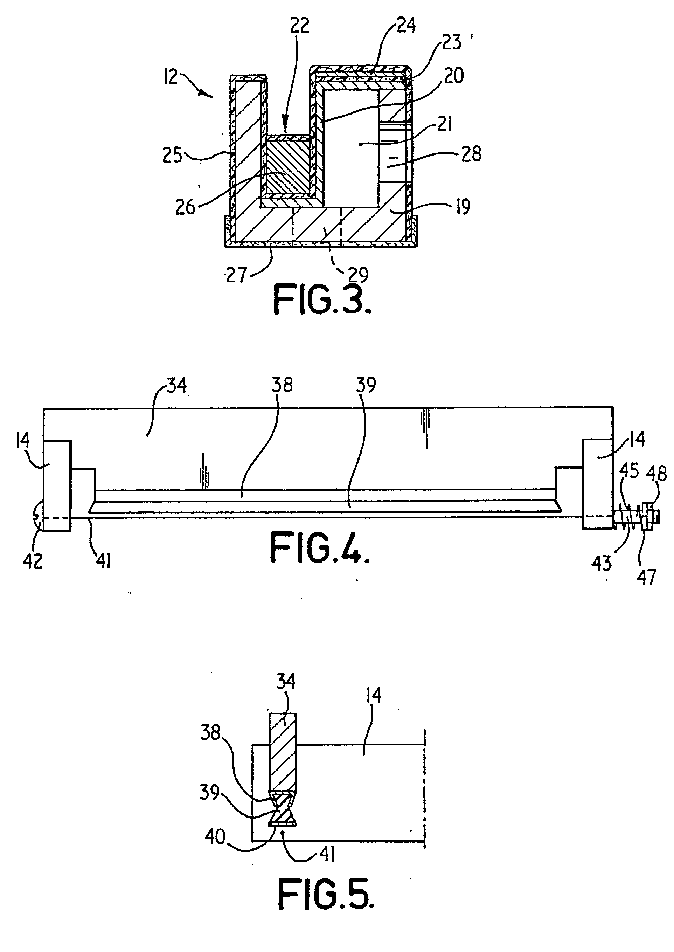

Turning now to the sealing device, the lower jaw 12 is shown in more detail in Figures 2 and 3.

As best shown in Figure 3, the lower jaw comprises a channel member 19 of aluminium, a Z cross-section aluminium strip 20 being fastened into the channel to define a chamber 21 and a harrower channel 22. On the outer face of the roof of the chamber 21 there is a strip of protective material 23 which comprises a woven glass fibre material coated with TEFLON. On top of this strip 23 there is a flat metal band of Nichrome Alloy 24, 5/16″ wide, which forms an electrical heating element.

The entire upper surface and sides of the jaw 12 are covered by a layer of TEFLON coated glass fibre fabric 25. A locking bar 26, the upper surface of which is coated with the same material, is secured in the bottom of the channel 22 by screws (not shown). The lower edges of the fabric 25 are joined together by a portion of adhesive tape which covers the lower face of the jaw 12 and overlaps the free edges of the fabric 25.

Passing through the fabric 25 and one flange of the member 19 is a series of air holes 28, which communicate with the chamber 21. As shown in Figure 2, there are a plurality of these air holes spaced apart along the length of the jaw. Furthermore there are three spaced apart holes 29 extending through the adhesive tape 27 and the base of the channel member 19, part of these holes also communicating with the chamber 21.

As shown in Figure 2, the rear flange of the channel member 19 is cut away at its ends as shown at 30, to enable the jaw to fit on to the machine, and the front flange and base of the channel member 19 are completely cut away at the ends of the jaw, so that insulating blocks 31 can be screwed to the rear flange. Each end 32 of the heating element 24 extends down a sloping portion of the front flange of the channel member 19 and into one of the insulating blocks 31, where the end of the element is electrically connected to a terminal 33 projecting downwardly from the associated insulating block 31.

The lower jaw can be connected to the machine by plugging the terminals 33 into sockets on the machine and electrical current can then be supplied to the element 24 to heat the element. A source of compressed air is also connected to the apertures 29 so that the compressed air can be blown into the chamber 21, exhausting through the apertures 28.

Turning now to Figures 4 and 5, the upper jaw 13 comprises an elongate aluminium plate 34 which extends between the arms 14. Secured to the lower face of the plate 34 is a metal channel member 38 having a dovetail cross-section. A resilient pad 39 of silicone rubber is slidably mounted in this channel and the lower face of the pad 39 has a layer 40 of TEFLON coated glass fibre fabric secured thereto. Between the arms 14 there is stretched a cutting wire 41. As shown in Figure 4, one end of the wire passes through one of the arms 14 and is wound around a locking screw 42. The other end of the wire passes through a hole in the other arm 14 and is connected to a rod 43. On the outer end of the rod 43 there is threaded a compression spring 45. The outer end of the rod 43 carries a screw-thread. A first nut 47 is screwed on to the rod to compress the spring 45 and hence put the wire 41 under tension. A second locknut 48 is then tightened up against the first nut 47.

The upper jaw is provided with a finger guard for safety purposes. This guard is not part of the invention and will not therefore be described in detail.

When the sealing device is in use, two layers of plastics material at the mouth of a bag are firmly clamped between the heating element 24 and the silicone rubber cushion 39, the wire 41 being pressed against the plastics material. A pulse of electricity is supplied to the heating element by the machine which causes the heating element to heat up very rapidly and melt the two layers of plastics material over a strip-like area which has a width substantially equal to the width of the heating element 24. The pressing action of the jaws causes the wire 41 to be forced through the softened plastics material, splitting the softened area. A blast of compressed air is then fed into the chamber 21, the pulse of electricity having ceased. The heating element cools rapidly and as the layers of plastics material also cool, they form a seal, although the scrap skirt at the mouth of the bag has been severed from the remainder of the bag by the wire 41 passing through the softened material. The jaws then open, the scrap is blown away, and the bag slides out of the machine, so that the machine is ready for another cycle.

The sealing device shown in the Figures enables the formation of a seal which is significantly wider, and hence stronger, than the type of seal which can be formed by a conventional heated wire sealing device. The wire 41, which splits the sealed area to provide a neat finish, need not be heated.

Since the resilient pad 39 effectively smothers the area of plastics material which is being heated, preventing air from reaching the plastics material, there is substantially no oxidisation of the plastics material and this in turn means that there is substantially no smoke or odour.

Since both jaws are readily removable from the machine, replacement or repair of the jaws is greatly facilitated.

The invention is not restricted to the details of the foregoing embodiment.

The existence of the channel 22 means that the jaw 12 could be used with a hot wire cutting device to provide an even wider seal, if the jaw 12 is utilised with a jaw which has a smothering pad similar to pad 39, and a heated wire offset from this pad, the smothering pad can cooperate with the heating element 24 to provide a wide seal, while the wire passes into the channel 22 to perform a trimming operation.

If desired, where the provision of the channel 22 is not required on the lower jaw, the jaw may have a body comprising a hollow aluminium tube of simple configuration, for example of square or rectangular cross-section. The interior of the tube, or of the jaw shown in Figures 2 and 3, may be divided into separate compartments spaced apart along the length of the jaw, each compartment having at least one air inlet aperture 29 and exhaust aperture 28. It is preferred that each compartment has a single inlet aperture 29 communicating with a central portion of the compartment and at least two exhaust apertures, communicating with one end portion of the compartment.

We have discovered that the invention is particularly effective for sealing polypropylene or P.V.C. if the wire 41 is mounted on the lower jaw. The wire may be stretched over the upper surface of the jaw between the contacts 33, so that an electric current passes through the wire so that the wire is heated slightly as well as the element 24. The wire may be coated or uncoated.

A sealing device according to the invention has other uses. It may be used to free a sealed bag from a stack of continuous plastics material being used to form the bags. It can also be used for any other application where it is desired to seal and cut plastics material.

The words Perspex, Teflon and Nichrome are registered Trade Marks in the United Kingdom at least.

**Claims**

1. A sealing device for use with a machine for packaging items into plastics bags, the sealing device being of the kind which not only heat seals each bag utilising electrical heat sealing means (24) but also utilises a separate cutting wire (41) to cut through the bag between the edges of the seal to trim off waste at the mouth of the bag, the sealing device having an elongate horizontally extending support jaw (12) over which a plastics bag may be positioned, the electrical heat sealing means (24) extending over an upper face of the jaw (12), characterised in that the jaw (12) contains a cooling chamber (21) having inlet passages (29) in the lower face of the jaw (12) and outlet passages (28) in a side face of the jaw (12) and the sealing device having means to supply to the cooling chamber (21), after a pulse of electricity has been used to heat the electrical heat sealing means (24), a blast of cooling air which enters through the inlet passages (29) and exhausts through the outlet passages (28).

2. A sealing device as claimed in Claim 1, having a second jaw (13) carrying the cutting wire (41) and movable downwardly towards the jaw (12) to clamp a plastics bag against the jaw (12).

3. A sealing device as claimed in Claim 2, in which the second jaw (13) has a support surface (39) which, when the two jaws are clamped together, co-operates with a support surface (24) of the first jaw to press the cutting wire and the melted plastics material together.

4. A sealing device as claimed in Claim 3, in which the support surface (39) of the second jaw comprises a resilient pad.

5. A sealing device as claimed in Claim 4, in which the resilient pad comprises silicon rubber.

6. A sealing device as claimed in Claim 4 or Claim 5, in which the surface of the pad is coated with a protective surface (40) to reduce the likelihood of the melted plastics sticking to the support surface of the second jaw (13).

7. A sealing device as claimed in any one of Claims 3 to 6, in which the support surface of the first jaw comprises the heat sealing means (24).

8. A sealing device as claimed in Claim 7, in which the heat sealing means (24) is coated with a protective surface (25) to reduce the likelihood of the melted plastics sticking to the support surface of the first jaw.

9. A sealing device as claimed in any one of the preceding claims, in which the cutting wire (41) is coated with a protective surface to reduce the likelihood of the melted plastics sticking to the cutting wire.

10. A machine for packaging the items into plastics bags, fitted with a sealing device as claimed in any one of the preceding claims.

**Revendications**

1. Dispositif de scellage destiné à une machine d'emballage d'articles dans des sacs de matière plastique, le dispositif de scellage étant du type qui non seulement soude thermiquement chaque sac à l'aide d'un dispositif de thermosoudage électrique (24) mais qui utilise aussi un fil séparé (41) de coupe du sac entre les bords de la soudure afin que la matière excédentaire soit découpée à l'embouchure du sac, le dispositif de thermosoudage ayant une mâchoire allongée (12) de support disposée horizontalement et au-dessus de laquelle un sac de matière plastique peut être disposé, le dispositif de thermosoudage électrique (24) étant disposé au-dessus d'une face supérieure de la mâchoire (12), caractérisé en ce que la mâchoire (12) contient une chambre (21) de refroidissement ayant des passages d'entrée (29) dans la face inférieure de la mâchoire (12) et des passages de sortie (28) dans une face latérale de la mâchoire (12) et le dispositif de thermosoudage comporte un dispositif destiné à transmettre à la chambre de refroidissement (21), après utilisation d'une impulsion électrique pour le chauffage du dispositif de thermosoudage électrique (24), une impulsion d'air de refroidissement qui pénètre par les passages d'entrée (29) et s'échappe par les passages de sortie (28).

2. Dispositif selon la revendication 1, caractérisé en ce qu'il comporte une seconde mâchoire (13) portant le fil de coupe (41) et mobile vers le bas vers la mâchoire (12) afin qu'elle serre un sac de matière plastique contre la mâchoire (12).

3. Dispositif selon la revendication 2, caractérisé en ce que la seconde mâchoire (13) a une surface de support (39) qui coopère, lorsque les deux mâchoires sont serrées l'une contre l'autre, avec une surface de support (24) de la première mâchoire afin que le fil de coupe et la matière plastique fondue soient repoussés l'un contre l'autre.

4. Dispositif selon la revendication 3, caractérisé en ce que la surface de support (39) de la seconde mâchoire est un patin élastique.

5. Dispositif selon la revendication 4, caractérisé en ce que le patin élastique est formé de caoutchouc de silicone.

6. Dispositif selon l'une des revendications 4 et 5, caractérisé en ce que la surface du patin est revêtue d'une surface protectrice (40) destinée à réduire la probabilité du collage de la matière plastique fondue à la surface de support de la seconde mâchoire (13).

7. Dispositif selon l'une quelconque des revendications 3 à 6, caractérisé en ce que la surface de support de la première mâchoire est le dispositif de thermosoudage (24).

8. Dispositif selon la revendication 7, caractérisé en ce que le dispositif de thermosoudage (24) est revêtu d'une surface protectrice (25) destinée à réduire la probabilité du collage de la matière plastique fondue à la surface de support de la première mâchoire.

9. Dispositif selon l'une quelconque des revendications précédentes, caractérisé en ce que le fil de coupe (41) est revêtu d'une surface protectrice destinée à réduire la probabilité du collage de la matière plastique fondue au fil de coupe.

10. Machine d'emballage d'articles dans des sacs de matière plastique, caractérisée en ce qu'elle comporte un dispositif de scellage selon l'une quelconque des revendications précédentes.

**Patentansprüche**

1. Versiegelungseinrichtung zur Anwendung bei einer Maschine zum Verpacken von Gegenständen in Plastikbeutel, wobei diese Versiegelungseinrichtung von jener Art ist, die nicht nur unter Verwendung elektrischer Heißsiegelvorrichtungen (24) jeden Beutel versiegelt, sondern auch einen getrennten Schneiddraht (41) verwendet, um den Beutel zwischen den Kanten der Versiegelung durchzuschneiden, damit Abfall an der Beutelöffnung entfernt wird, wobei die Versiegelungseinrichtung eine langgestreckte und sich in horizontaler Richtung erstreckende Stützklemme (12) aufweist, auf welche der Plastikbeutel aufgeschoben werden kann, und wobei sich die elektrische Heißsiegelvorrichtung (24) über eine obere Fläche der Klemme (12) erstreckt, dadurch gekennzeichnet, daß die Klemme (12) eine Kühlkammer (21) aufweist, welche Einlaßkanäle (29) in der unteren Fläche der Klemme (12) und Auslaßkänäle (28) in einer Seitenfläche der Klemme (12) hat, daß die Versiegelungseinrichtung Mittel zum Beschicken der Kühlkammer (21) mit einem Kühlluftstrom aufweist, der durch die Einlaßkanäle (29) eintritt und durch die Auslaßkanäle (28) austritt, und zwar nachdem ein Stromstoß angewandt wurde, um die elektrische Heißsiegelvorrichtung (24) aufzuheizen.

2. Versiegelungseinrichtung nach Anspruch 1, dadurch gekennzeichnet, daß eine zweite Klemme (13) vorgesehen ist, die den Schneiddraht (41) trägt und die gegen die Klemme (12) nach unten bewegbar ist, um zusammen mit Klemme (12) einen Plastikbeutel einzuspannen.

3. Versiegelungseinrichtung nach Anspruch 2, dadurch gekennzeichnet, daß die zweite Klemme (13) eine Tragfläche (39) aufweist, die dann, wenn die beiden Klemmen zusammengespannt sind, mit einer Stützfläche (24) der ersten Klemme zusammenarbeiten, indem sie den Schneiddraht und das geschmolzene Plastikmaterial gegeneinander drücken.

4. Versiegelungseinrichtung nach Anspruch 3, dadurch gekennzeichnet, daß die Tragfläche (39) der zweiten Klemme ein nachgiebiges Polster aufweist.

5. Versiegelungseinrichtung nach Anspruch 4, dadurch gekennzeichnet, daß das nachgiebige Polster Silicongummi umfaßt.

6. Versiegelungseinrichtung nach Anspruch 4 oder 5, dadurch gekenzeichnet, daß die Fläche des Polsters einen Schutzüberzug (40) aufweist, um die Gefahr des Anhaftens von geschmolzenem Plastikmaterial and der Tragfläche der zweiten Klemme (13) zu verringern.

7. Versiegelungseinrichtung nach einem der Ansprüche 3—6, dadurch gekennzeichnet, daß die Stützfläche der ersten Klemme die Heißsiegelungsvorrichtung (24) aufweist.

8. Versiegelungseinrichtung nach Anspruch 7, dadurch gekennzeichnet, daß die Heißsiegelvorrichtung (24) mit einem Schutzüberzug (25) beschichtet ist, um die Gefahr des Haftens von geschmolzenem Plastikmaterial an der Stützfläche der ersten Klemme zu verringern.

9. Versiegelungseinrichtung nach einem der Ansprüche 1—8, dadurch gekennzeichnet, daß der Schneiddraht (41) mit einem Schutzüberzug beschichtet ist, um die Gefahr des Anhaftens geschmolzenen Plastikmaterials am Schneiddraht zu verringern.

10. Maschine zum Verpacken von Gegenständen in Plastikbeuteln, dadurch gekennzeichnet, daß diese mit einer Versiegelungseinrichtung gemäß einem der Ansprüche 1—9 ausgerüstet ist.

FIG.1.

FIG.2.

FIG.3.

FIG.4.

FIG.5.